# EUROPÄISCHE PATENTSCHRIFT

(11) **EP 3 126 700 B1**
(45) Veröffentlichungstag und Bekanntmachung des Hinweises auf die Patenterteilung: **07.07.2021**
(21) Anmeldenummer: 15715971.6
(22) Anmeldetag: 10.03.2015
(51) Int. Cl.: F16D 48/04, F16D 48/02, F16D 25/00

(54) **KUPPLUNGSBETÄTIGUNGSVORRICHTUNG**
CLUTCH OPERATING DEVICE
DISPOSITIF DE COMMANDE D'EMBRAYAGE

(30) Priorität: 31.03.2014 DE 102014205967
(43) Veröffentlichungstag der Anmeldung: 08.02.2017
(73) Patentinhaber: Schaeffler Technologies AG & Co. KG, 91074 Herzogenaurach (DE)
(72) Erfinder: HONSELMANN, Sebastian, 77886 Lauf (DE); WELTER, Roland, 77815 Bühl (DE)
(86) Internationale Anmeldenummer: PCT/DE2015/200136
(87) Internationale Veröffentlichungsnummer: WO 2015/149769

(56) Entgegenhaltungen:
- EP-A1- 2 600 021
- EP-A2- 0 798 480
- EP-A2- 1 422 433
- WO-A1-2005/093277
- DE-A1- 10 201 306
- US-A1- 2007 205 072

## Beschreibung

Die Erfindung betrifft eine Kupplungsbetätigungsvorrichtung, insbesondere für ein Kraftfahrzeug.

Eine Kupplungsbetätigungsvorrichtung wird im Antriebsstrang eines Kraftfahrzeuges zur Betätigung einer Fahrzeugkupplung eingesetzt. Bekannt ist, dass mittels der hydraulischen Kupplungsbetätigungsvorrichtung mit einem Geberzylinder und einem Nehmerzylinder unter Verwendung mechanischer Komponenten, wie beispielsweise einem Ausrücklager und einer Kupplungstellerfeder, die Fahrzeugkupplung betätigt werden kann. Typischerweise wird der mit der Fahrzeugkupplung verbundene Nehmerzylinder durch den Geberzylinder betätigt, wobei die Druckräume des Nehmer- und des Geberzylinders über eine hydraulische Druckleitung miteinander verbunden sind. Ein Kolben des Geberzylinders wird typischerweise durch ein Pedal, beispielsweise ein Fußpedal, mit einer Druckkraft beaufschlagt. Diese Druckkraft erzeugt einen hydraulischen Druck in der Kupplungsbetätigungsvorrichtung, mit dem der Nehmerzylinder und schließlich die Fahrzeugkupplung betätigt werden.

Aus dem Dokument DE 10 2013 214 204 A1 ist eine Kupplungsbetätigungsvorrichtung bekannt, die einen Geberzylinder, einen Nehmerzylinder und eine diese verbindende Druckleitung aufweist, wobei in der Druckleitung eine hydraulische Übersetzungseinrichtung angeordnet ist, die eine veränderbare Übersetzung von Druck bzw. Volumenstrom zwischen dem Geberzylinder und dem Nehmerzylinder bewirkt.

Aus der DE 102 01 306 A1 ist eine Kupplungsbetätigungsvorrichtung bekannt, welche einen Hydraulikmechanismus mit einem Geber, einem Nehmer und einer diese verbindenden Druckleitung umfasst. Die Druckleitung umfasst ein elektromotorisches Aggregat, welches aus zwei getrennten Gehäusen mit jeweils einem oder mehreren Kolben aufgebaut ist, wobei der in einem ersten Gehäuse befindliche Kolben mit einem Schneckengetriebe in Wirkverbindung steht, welches durch einen Motor angesteuert wird, wobei das erste Gehäuse mit dem zweiten Gehäuse in Fluidverbindung steht. Die bekannte Kupplungsbetätigungsvorrichtung wird so gesteuert, dass sie, wenn der Motor des elektromotorischen Aggregats ausfällt, über ein mechanisches Kupplungspedal betrieben werden kann.

Die Aufgabe der Erfindung ist es eine verbesserte Kupplungsbetätigungsvorrichtung zu schaffen, welche den Fahrkomfort für den Fahrer erhöht.

Diese Aufgabe wird mit einer Kupplungsbetätigungsvorrichtung mit den Merkmalen von Anspruch 1 gelöst.

Vorteilhafte Ausgestaltungen der Kupplungsbetätigungsvorrichtung ergeben sich aus den abhängigen Ansprüchen.

Die Kupplungsbetätigungsvorrichtung, insbesondere für ein Kraftfahrzeug, weist einen einen Geberzylinder aufweisenden Geber, einen einen Nehmerzylinder aufweisenden Nehmer und eine den Geberzylinder und den Nehmerzylinder verbindende Druckleitung auf, wobei in der Druckleitung ein elektromotorisches Aggregat angeordnet ist. Hierdurch kann ein aktiver, automatisierter Eingriff vorgenommen werden und eine Kupplung im Antriebsstrang des Kraftfahrzeugs geöffnet und geschlossen werden.

Gleichzeitig kann der Fahrer des Kraftfahrzeuges noch zu jeder Zeit die manuelle Betätigung der Kupplung mittels eines mit dem Geberzylinder verbundenen Kupplungspedals übernehmen. Hierbei priorisiert die manuelle Betätigung mit dem Kupplungspedal, insbesondere einem Fußpedal, die automatisierte Betätigung der Kupplung. Hierbei ist vorteilhaft, dass der Fahrer nicht unbedingt aktiv das Kupplungspedal betätigen muss, um die Kupplung zu öffnen und/oder zu schließen. Das elektromotorische Aggregat kann hierbei die Funktion der automatischen Kupplungsbetätigung, insbesondere der automatischen hydraulischen Kupplungsbetätigung, übernehmen. Die Kupplung kann zum Einen mittels hydraulischer Kraftübertragung von dem Geber an den Nehmer betätigt werden und eine Fluidsäule durch das elektromotorische Aggregat hindurch zum Nehmerzylinder schieben. Zum Anderen kann die hydraulische Kraftübertragung von dem elektromotorischen Aggregat übernommen werden. Somit lässt die Kupplungsbetätigungsvorrichtung mit dem elektromotorischen Aggregat zwei Betätigungsarten der Kupplung zu.

Hierzu weist das elektromotorische Aggregat erfindungsgemäss einen Kolben auf, der mit einer Spindel und einem Spindeltrieb in Wirkverbindung steht. Hierbei wird der Kolben mittels der Spindel und des Spindeltriebs verschoben. Bevorzugt kann der Kolben linear verschoben werden. Dadurch kann eine Schnüffelbohrung in Richtung des Nehmers verschlossen werden und damit das in der Druckleitung befindliche Fluid zum Nehmerzylinder verschoben werden. Hierdurch kann die Kupplung geöffnet werden. Erfolgt die Verschiebung des Kolbens in umgekehrter Richtung, kann die Kupplung geschlossen werden.

In einer Ausgestaltung der Kupplungsbetätigungsvorrichtung ist der Spindeltrieb ein selbsthemmender Spindeltrieb.

In einer alternativen Ausgestaltung der Kupplungsbetätigungsvorrichtung ist der Spindeltrieb ein nicht selbsthemmender Spindeltrieb, insbesondere ein Kugelgewindetrieb.

Erfindungsgemäß sind die Spindel und der Spindeltriebs mittels eines Motors ansteuerbar. Hierbei kann eine Drehbewegung des Motors in eine Linearbewegung des Kolbens, insbesondere einer Kolbenstange, umgesetzt werden.

Hierbei ist der Motor bevorzugt ein Elektromotor, insbesondere ein geregelter Elektromotor. Der Motor kann hierbei durch eine Betätigungseinrichtung aktiviert werden, die bevorzugt an einer Konsole des Kraftfahrzeugs angeordnet ist.

Bevorzugt weist das elektromotorische Aggregat Einrichtungen auf, die eine Fehlfunktion korrigieren können. Eine Fehlfunktion kann beispielsweise durch einen Stromausfall verursacht sein.

Die Einrichtungen können hierbei Hydraulikkomponenten sein, beispielsweise Druckbegrenzungsventile, Rückschlagventile und/oder Absperrventile. Beispielsweise kann ein 2/2-Wegeventil vorgesehen sein, welches magnetisch gesteuert ist und bevorzugt parallel zum elektromotorischen Aggregat angeordnet ist. Die Einrichtungen zur Korrektur einer Fehlfunktion können auch in dem Aggregat angeordnet sein. Hierbei können bevorzugt zwangsgesteuerte Ventile, wie beispielsweise ein Ventil mit einer Rückschlagfunktion, einer Nachsaugfunktion und/oder einer Überströmfunktion in der Dichtung vorgesehen sein.

Ferner kann ein Druckspeicher und/oder ein Reservoir vorgesehen sein. In dem Druckspeicher und/oder Reservoir kann Fluid temporär aufgenommen und gespeichert werden.

Eine Aktivierung der automatisierten Kupplungsbetätigung, insbesondere eine Übergabe von manuell zu automatischer Betätigung, kann bevorzugt bei getretenem Kupplungspedal durch die manuelle Betätigung der Betätigungseinrichtung, beispielsweise eines Schalters, an der Konsole des Kraftfahrzeugs erfolgen.

Die Aufgabe wird ebenfalls mit einem Schaltgetriebe mit einer Kupplung zur Trennung oder Verbindung des Antriebsstranges, insbesondere in einem Kraftfahrzeug, und einer erfindungsgemäßen hydraulischen Kupplungsbetätigungsvorrichtung nach einem der Ansprüche 1 bis 7 gelöst.

Weitere vorteilhafte Ausgestaltungen sind durch die nachfolgende Figurenbeschreibung und durch die Unteransprüche beschrieben.

Die Erfindung wird nachfolgend auf der Grundlage zumindest eines Ausführungsbeispiels anhand der Figuren der Zeichnung näher erläutert. Es zeigen:
Fig. 1 eine schematische Darstellung einer hydraulischen Kupplungsbetätigungsvorrichtung mit einem elektromotorischen Aggregat,
Fig. 2 das elektromotorische Aggregat.

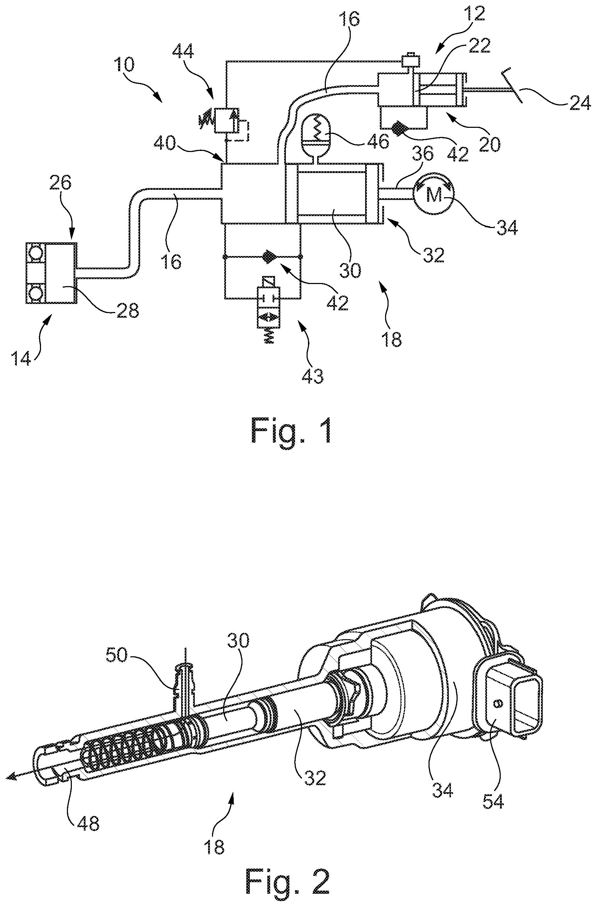

Figur 1 zeigt in schematischer Schnittdarstellung eine Kupplungsbetätigungsvorrichtung 10. Die Kupplungsbetätigungsvorrichtung 10 weist einen Geber 12 und einen Nehmer 14 sowie ein in einer Druckleitung 16 angeordnetes elektromotorisches Aggregat 18 auf. Der Geber 12 weist einen Geberzylinder 20 und einen Geberkolben 22 auf und ist mit einem Kupplungspedal 24 verbunden. Der Nehmer 14 weist einen Nehmerzylinder 26 und einen Nehmerkolben 28 auf und ist mit der nicht dargestellten Kupplung verbunden.

Das elektromotorische Aggregat 18 weist einen Kolben 30 und eine Spindeltrieb 32 auf. Der Spindeltrieb 32 wird von einem Motor 34 angetrieben, der mit dem Spindeltrieb 32 mittels einer Verbindung 36 verbunden und steuerbar ist. Das elektromotorische Aggregat 18 weist ein Gehäuse 40 auf, in dem der Kolben 30 und der Spindeltrieb 32 angeordnet sind. Das Gehäuse 40 ist bevorzugt als Zylinder 40 ausgebildet.

Das elektromotorische Aggregat 18 weist ferner ein, Rückschlagventil 42, ein Absperrventil 43, ein Überdruckventil 44 oder Druckbegrenzungsventil 44 und/oder eine Einrichtung, die eine Überströmfunktion in der Dichtung realisiert, auf.

Figur 2 zeigt das elektromotorische Aggregat 18 in perspektivischer Darstellung. Gleiche Teile sind mit den gleichen Bezugsziffern bezeichnet. Das elektromotorische Aggregat 18 ist an einem Anschluss 48 an den Nehmer 14, insbesondere an den Nehmerzylinder 26, anschließbar. An einem Anschluss 50 ist das elektromotorische Aggregat 18 an den Geber 12, insbesondere an den Geberzylinder 20, anschließbar. Der Spindeltrieb 32 ist mit dem Motor 34 antreibbar. Der Motor 34 ist hierbei bevorzugt ein elektrischer Motor 34, der auch als E-Motor 34 bezeichnet wird. Der Motor 34 ist mittels eines elektrischen Anschlusses 54 mit einem Bordnetz des Kraftfahrzeugs verbindbar.

Der Betrieb und die Funktionsweise der hydraulischen Kupplungsbetätigung 10 wird nachfolgend beispielhaft an einer Situation dargestellt, bei der das Kupplungspedal 24 bereits getreten ist. Der E-Motor 34 kann den Kolben 30 des elektromotorischen Aggregats 18 verfahren und versucht damit das Volumen des Fluids in der Druckleitung 16 in Richtung des Nehmers 14, insbesondere des Nehmerzylinders 26, zu verschieben. Da der Nehmerzylinder 26 durch die ursprüngliche Betätigung des Kupplungspedals 24 schon in einem ausgekuppelten Zustand vorliegt und mit Fluid gefüllt ist, kann das elektromotorische Aggregat 18 kein weiteres Fluid in den Nehmer 14 befördern. Der Nehmer 14 würde überlastet werden. Das zusätzliche Volumen aus dem elektromotorischen Aggregat 18 kann auch zwischengespeichert werden, indem das Fluid beispielsweise in ein Reservoir 46 oder einen Fluidtank 46 geleitet wird. Somit kann die Funktion der Druckbegrenzung durch die Ventile 42, 43 und/oder 44 und/oder den Drucktank oder das Reservoir 46 realisiert werden. Hierbei weist das Druckbegrenzungsventil 44 einen Schaltpunkt auf, der leicht erhöht gegenüber dem maximalen Betriebsdruck der hydraulischen Kupplungsbetätigung 10 ist.

Ist der Kolben 30 in einer betätigten Endlage angekommen, wird dem Fahrer über eine geeignete Meldung mitgeteilt, dass das elektromotorische Aggregat 18 aktiv ist und das Kupplungspedal 24 losgelassen werden kann. Die Meldung kann beispielsweise durch eine optische Anzeige erfolgen.

Da der Geber 12, insbesondere der Geberzylinder 20, das zugeführte Fluid nicht entnehmen kann, da der Pfad der Druckleitung 16 durch den Kolben 30 geschlossen ist, kann das Fluidvolumen aber beispielsweise über das Rückschlagventil 42 und/oder eine Primärdichtung mit Nachsaugfunktion und/oder das Abschaltventil 43 wieder von dem als Sekundärseite fungierenden Reservoir 46 der als Primärseite fungierenden Geberseite zuführen. Hierbei kann sich das Kupplungspedal 24 von einer ausgekuppelten (Kupplung geöffnet) in eine eingekuppelten Ruhestellung bewegen. Die Kupplungsbetätigungsvorrichtung 10 kann nun die Kupplung, beispielsweise im Stauassistentenmodus, automatisiert betätigen.

Eine Übergabe, insbesondere vom automatisierten Betrieb, zu dem manuellen Betrieb kann zu einem Zeitpunkt erfolgen, in dem die Kupplungsbetätigungsvorrichtung 10 die Kupplung geschlossen hat, wobei der Weg des Fluids vom Geber 12 zum Nehmer 14 durch das elektromotorische Aggregat 18 freigegeben ist. Die Übergabe kann auch zu einem beliebigen Zeitpunkt erfolgen. Hierbei ist die Randbedingung zu beachten, dass die Schnüffelbohrung versperrt ist. Deshalb wird zunächst das vom Geber 12 verschobene Fluid in dem Druckspeicher 46 zwischengespeichert. Der Energiespeicher im Druckspeicher 46 kann vorzugsweise die Kennlinie einer Kupplung haben, um dem Fahrer das "normale" Gefühl der Pedalkupplung 24 zu vermitteln. Hierbei ist insbesondere eine Kraft/Weg-Kennlinie angepasst. Ist der erzeugte Druck in Richtung Nehmer 14 durch den Eingriff des Fahrers erreicht oder leicht überschritten, öffnet das Rückschlagventil 42, um das weitere Volumen zum Nehmer 14 zu verschieben. Im Nehmer 14 kann beispielsweise ein Wegsensor integriert sein, der in Figur 1 nicht dargestellt ist. Von dem Wegsensor erhält die Kupplungsbetätigungsvorrichtung 10 das Signal, dass der Fahrer die Überschreib- oder die so genannte Overruling-Funktion benutzt und damit stehenbleiben muss. Somit ist der automatisierte Betrieb durch den manuellen Betrieb priorisiert.

Zu einem geeigneten Zeitpunkt fährt der Motor 34 aktiv wieder in die Ausgangsposition zurück. Dies kann alternativ auch per Druck im Gesamtsystem der hydraulischen Kupplungsbetätigung 10 erfolgen. Will der Fahrer wieder einkuppeln, so kann das Fluid vom Nehmer 14 entweder durch ein Bypassventil, beispielsweise das Ventil 43, welches als 2/2-Wege-Ventil ausgeführt sein kann, und/oder durch das Druckbegrenzungsventil 44 zum Geber 12 zurückfließen. Das Bypassventil 43 kann ein normalgeöffnetes Ventil mit Rückstellfeder und Magnetbetätigung sein, kann aber alternativ auch mechanisch zwangsgesteuert sein. Alternativ kann das Fluid durch den bereits zurückgefahrenen Kolben 30 zum Geber 12 fließen.

Der Kolben 30 darf hierbei stromlos langsam zurückfahren, sodass der Fahrer eingreifen kann. Auf diese Weise könnte das Fluid durch das dann selbstöffnende Bypassventil 43 oder das Ventil 44 wieder zum Nehmer 14 zurückgeleitet werden.

Zusätzlich kann es vorgesehen sein, mittels der hydraulischen Kupplungsbetätigung 10 in den konventionellen Handschalter weiteres Funktionen wir Komfortsteigerung und Kraftstoffersparnis durch das elektromotorische Aggregats 18 zu implementieren. Die direkte mechanische Verbindung zwischen dem Kupplungspedal 24 und der Kupplung bleibt hierbei erhalten, wobei die Kupplungsbetätigungsvorrichtung 10 die Betätigung der Kupplung und die entsprechende Übergabe von manuell zu automatisiert und umgekehrt ermöglicht. Hierbei befinden sich Funktionen, wie Anfahren, Segeln, Notfallbremsassistent steuerungstechnisch auf einem höheren Fahrzeuglevel.

Insgesamt kann durch das elektromotorische Aggregat 18 der Fahrkomfort für den Fahrer erhöht werden, da der Fahrer das Kupplungspedal 24 in einer Stausituation nicht ständig drücken muss.

### Bezugszeichenliste

- 10: Kupplungsbetätigungsvorrichtung
- 12: Geber
- 14: Nehmer
- 16: Druckleitung
- 18: elektromotorisches Aggregat
- 20: Geberzylinder
- 22: Geberkolben
- 24: Kupplungspedal
- 26: Nehmerzylinder
- 28: Nehmerkolben
- 30: Kolben des Aggregats 18
- 32: Spindeltrieb
- 34: Motor
- 36: Verbindung zwischen Motor und Spindel
- 40: Gehäuse
- 42: Rückschlagventil
- 43: Abschaltventil, 2/2-Wegeventil
- 44: Druckbegrenzungsventil, Druckbegrenzung
- 46: Reservoir, Druckspeicher
- 48: Anschluss zum Nehmer 14
- 50: Anschluss zum Geber 12
- 54: elektrischer Anschluss für den Motor

## Patentansprüche

1. Kupplungsbetätigungsvorrichtung für ein Kraftfahrzeug zur manuellen und automatisierten Betätigung einer Kupplung, mit einem einen Geberzylinder (20) aufweisenden Geber (12), einem einen Nehmerzylinder (26) aufweisenden Nehmer (14) und einer den Geberzylinder (20) und den Nehmerzylinder (26) verbindenden Druckleitung (16), wobei in der Druckleitung (16) ein elektromotorisches Aggregat (18) angeordnet ist, das ein Gehäuse (40) und einen Kolben (30) aufweist, **dadurch gekennzeichnet, dass** der Kolben (30) mit einem Spindeltrieb (32) in Wirkverbindung steht, und wobei der Spindeltrieb (32) mittels eines Motors (34) so ansteuerbar ist, wobei wenn ein Kupplungspedal (24) getreten ist, der Kolben (30) des elektromotorischen Aggregats (18) verfahren wird, wobei ein Volumen des Fluids in der Druckleitung (16) in Richtung des Nehmerzylinders (26) verschoben wird, und, wenn der Kolben (30) in einer betätigten Endlage angekommen ist, einem Fahrer des Kraftfahrzeugs über eine geeignete Meldung mitgeteilt wird, dass das elektromotorische Aggregat 18 aktiv ist und das Kupplungspedal 24 losgelassen werden kann.

2. Kupplungsbetätigungsvorrichtung nach Anspruch 1, **dadurch gekennzeichnet, dass** der Spindeltrieb (32) ein selbsthemmender Spindeltrieb ist.

3. Kupplungsbetätigungsvorrichtung, nach Anspruch 1, **dadurch gekennzeichnet, dass** der Spindeltrieb (32) ein nicht selbsthemmender Spindeltrieb ist, wie insbesondere ein Kugelgewindetrieb ist.

4. Kupplungsbetätigungsvorrichtung nach einem der vorhergehenden Ansprüche, **dadurch gekennzeichnet, dass** der Motor (34) ein Elektromotor, insbesondere ein geregelter Elektromotor, ist.

5. Kupplungsbetätigungsvorrichtung nach einem der vorhergehenden Ansprüche, **dadurch gekennzeichnet, dass** das elektromotorische Aggregat (18) Einrichtungen (42, 44, 43, 46), insbesondere hydraulische Einrichtungen, (42, 43, 44, 46) aufweist, mittels welcher eine Fehlfunktion korrigierbar ist.

6. Kupplungsbetätigungsvorrichtung nach Anspruch 5, **dadurch gekennzeichnet, dass** die hydraulische Einrichtung (42, 43, 44, 46) zur Korrektur einer Fehlfunktion ein Rückschlagventil (42), ein Absperrventil (43) und/oder ein Druckbegrenzungsventil (44) aufweist.

7. Kupplungsbetätigungsvorrichtung nach einem der vorhergehenden Ansprüche, **dadurch gekennzeichnet, dass** ein Druckspeicher (46) vorgesehen ist.

8. Schaltgetriebe mit einer Kupplung zur Trennung oder Verbindung eines Antriebsstranges, insbesondere in einem Kraftfahrzeug, und einer hydraulischen Kupplungsbetätigung (10) nach einem der Ansprüche 1 bis 7.

## Claims

1. A clutch actuating device for a motor vehicle for manual and automated actuating of a clutch, having a master unit (12) having a master cylinder (20), a slave unit (14) having a slave cylinder (26), and a pressure line (16) connecting the master cylinder (20) to the slave cylinder (26), an electromotive assembly (18) being arranged in the pressure line (16), which assembly has a housing (40) and a piston (30), **characterised in that** the piston (30) is in operative connection with a spindle drive (32), and the spindle drive (32) can be controlled by means of a motor (34) such that when a clutch pedal (24) is pressed, the piston (30) of the electromotive assembly (18) is moved, a volume of the fluid being moved in the pressure line (16) in the direction of the slave cylinder (26), and, when the piston (30) has reached an actuated end position, a driver of the motor vehicle is informed via a suitable notification that the electromotive assembly 18 is active and that the clutch pedal 24 can be released.

2. The clutch actuating device according to claim 1, **characterised in that** the spindle drive (32) is a self-locking spindle drive.

3. The clutch actuating device according to claim 1, **characterised in that** the spindle drive (32) is a non-self-locking spindle drive, such as a ball screw drive.

4. The clutch actuating device according to any one of the preceding claims, **characterised in that** the motor (34) is an electric motor, in particular a regulated electric motor.

5. The clutch actuating device according to any one of the preceding claims, **characterised in that** the electromotive assembly (18) has devices (42, 44, 43, 46), in particular hydraulic devices, (42, 43, 44, 46) by means of which a malfunction can be corrected.

6. The clutch actuating device according to claim 5, **characterised in that** the hydraulic device (42, 43, 44, 46) has a check valve (42), a shut-off valve (43) and/or a pressure-limiting valve (44) for correcting a malfunction.

7. The clutch actuating device according to any one of the preceding claims, **characterised in that** a pressure accumulator (46) is provided.

8. A manual transmission having a clutch for separating or connecting a drive train, in particular in a motor vehicle, and a hydraulic clutch actuating device (10) according to one of claims 1 to 7.

## Revendications

1. Dispositif de commande d'embrayage pour véhicule à moteur pour la commande manuelle et automatisée d'un embrayage, comprenant un maître (12) ayant un maître-cylindre (20), un esclave (14) ayant un cylindre esclave (26) et une conduite de pression (16) reliant le maître-cylindre (20) et le cylindre esclave (26), un bloc moteur électrique (18) étant agencé dans la conduite de pression (16), qui a un boîtier (40) et un piston (30), **caractérisé en ce que** le piston (30) est en liaison fonctionnelle avec un mécanisme à broche (32) et dans lequel le mécanisme à broche (32) peut être commandé au moyen d'un moteur (34) de sorte que lorsqu'une pédale d'embrayage (24) est enfoncée, le piston (30) du bloc moteur électrique (18) soit déplacé, un volume de fluide étant déplacé dans la conduite de pression (16) en direction du cylindre esclave (26) et, lorsque le piston (30) a atteint une position finale actionnée, un conducteur du véhicule à moteur soit informé par l'intermédiaire d'un message approprié que le bloc moteur électrique (18) est actif et que la pédale d'embrayage (24) peut être relâchée.

2. Dispositif de commande d'embrayage selon la revendication 1, **caractérisé en ce que** le mécanisme à broche (32) est un mécanisme à vis autobloquant.

3. Dispositif de commande d'embrayage selon la revendication 1, **caractérisé en ce que** le mécanisme à broche (32) est un mécanisme à broche non autobloquant, tel que notamment un entraînement par vis à billes.

4. Dispositif de commande d'embrayage selon l'une quelconque des revendications précédentes, **caractérisé en ce que** le moteur (34) est un moteur électrique, en particulier un moteur électrique régulé.

5. Dispositif de commande d'embrayage selon l'une quelconque des revendications précédentes, **caractérisé en ce que** le bloc moteur électrique (18) comporte des dispositifs (42, 44, 43, 46), en particulier des dispositifs hydrauliques, (42, 43, 44, 46) au moyen desquels un dysfonctionnement peut être corrigé.

6. Dispositif de commande d'embrayage selon la revendication 5, **caractérisé en ce que** le dispositif hydraulique (42, 43, 44, 46) comporte un clapet anti-retour (42), un clapet d'arrêt (43) et/ou un limiteur de pression (44) pour corriger un dysfonctionnement.

7. Dispositif de commande d'embrayage selon l'une quelconque des revendications précédentes, **caractérisé en ce qu'**un accumulateur de pression (46) est prévu.

8. Boîte de vitesses comprenant un embrayage pour séparer ou relier une chaîne cinématique, notamment dans un véhicule à moteur et un dispositif de commande hydraulique d'embrayage (10) selon l'une quelconque des revendications 1 à 7.
